# EUROPEAN PATENT APPLICATION

(11) **EP 1 681 615 A1**
(43) Date of publication of application: **19.07.2006**
(21) Application number: 04773726.7
(22) Date of filing: 05.10.2004
(51) Int. Cl.: G06F 3/02, H04M 1/00

(54) **ENTERING APPARATUS**

(30) Priority: 10.10.2003 JP 2003351526
(71) Applicant: MATSUSHITA ELECTRIC INDUSTRIAL CO., LTD., Kadoma-shi, Osaka 571-8501 (JP)
(72) Inventor: KUSUNOKI, Yasumasa c/o Matsushita El. Ind. Co.,, Shiromi 1-chome, Chuo-ku, Osaka 540-6319 (JP); ENDO, Koji c/o Matsushita El. Ind. Co., Ltd., 1-chome, Chuo-ku, Osaka 540-6319 (JP); YUHARA, Yosuke c/o Matsushita El. Ind. Co.,, Shiromi 1-chome, Chuo-ku, Osaka 540-6319 (JP); MINAMOTO, Naoki c/o Matsushita El. Ind. Co.,, Shiromi 1-chome, Chuo-ku, Osaka 540-6319 (JP)
(74) Representative: Grünecker, Kinkeldey, Stockmair & Schwanhäusser Anwaltssozietät
(86) International application number: PCT/JP2004/015002
(87) International publication number: WO 2005/036379

(57) **Abstract**

There is disclosed an input device which prevent an operator's unintended operation without degrading operability, even when a plurality of operation input means is arranged close to each other so as to respond to various operations. When an input managing unit 25 receives an operation signal of a second input device 22 from a second input control unit 24, the input managing unit 25 determines whether a first input device 21 is being depressed or not from an operation signal from a first input control unit 23. Then if the first input device is being depressed, the operation signal from the second input device 22 is invalidated and discarded. Similarly, the operation signal from the second input device 22 is also invalidated until a given period has lapsed after the first input device 21 is released. When a second input control unit 24 receives device data from the second input device data 22, the input from the second input device 22 are invalidated so that notification of the device data to an input managing unit 25 is not performed for a given period from the initiation of depressing of the second input device 22, thereby preventing malfunctions of the second input device 22 composed of a pressure sensitive-type operation input device.

## Description

### <TECHNICAL FIELD>

The present invention relates to an input device used for portable electronic apparatuses or the like.

### <BACKGROUND ART>

Recently, as functions of electronic apparatuses such as portable electronic apparatuses are diversified, input devices corresponding to complicated operations has are needed. For example, a mobile phone is provided with a direction operation key for performing an operation of selecting items such as display menu displayed on a display unit and for performing an operation of scrolling displayed contents. As a direction operation key for such an operation, a four-way operation key is generally used, The four-way operation key is operated by depressing key switches arranged correspondingly to four directions of right, left, up and down. Besides the four-way operation key, various types of operation input means are known, including a roller-shaped input means which performs a rotating operation, a stick-shaped input means which perform a tilting operation, etc.

The four-way operation key and the like are inappropriate for, for example, the operations that require a complicated operation and a sense of speed corresponding to contents such as video games. Further, when performing an operation of greatly shifting a cursor or display contents, such as a scrolling operation, a key located in a desired direction needs be depressed continuously other various operations are performed by using the four-way operation key together with other keys or substituting other keys for the four-way operation key. Therefore, in the display contents of the display unit, an image of the operation result about the movement is not interlocked with the operating direction, or fingers should be moved greatly to perform a desired operation, which shows a poor operability. In this way, in a conventional input device, in the case of performing the operation that requires various operations or a sense of speed, troublesome operations should be performed. Therefore, some input devices are difficult to be used depending on contents, or there are also limitations to loadable contents which are adapted to input devices.

For example, JP-A 8-314600 (JP-H8-314600-A) discloses a key input device in which, even when the contents of a key input device to be increased increase, a plurality of double depressing is detected and processed, so that the increased contents to be processed can be executed by keeping double depressing without increasing kinds of double depressing of a key input operation unit. In addition, the malfunction that double depressing continues accidentally can be prevented. In executing double depressing of such a key input operation unit, operations need be performed with a plurality of fingers. Thus, the operations are hard or prompt operations are difficult. It is also hard to respond to various operations which are required for contents.

As a structure of an input device which can respond to various operations, for example, an input device of complex type in which a plurality of operation input means is arranged is conceivable. In mobile phones or the like, when such an input device of the complex type is mounted, a plurality of operation input means is arranged close to each other in a small area so that it can be easily operated with one finger, thereby achieving reduction in size and weight, and responding to complicated operations while ensuring good operability. However, when a plurality of operation input means is arranged close to each other in a small area, an operator may unintentionally operate other operation input means, which causes malfunctions due to the competition between operation inputs. In particular, when different kinds of operation input means which are different in the sensitivity of reaction to operations, are arranged close to each other, the competition between unintended operation inputs need be prevented in advance.

### <DISCLOSURE OF THE INVENTION>

The present invention has been achieved in consideration of the above situations. It is therefore an object of the present invention to provide an input device capable of preventing an operator's unintended operation without degrading operability, even when a plurality of operation input means is arranged close to each other so as to respond to various operations

The input device of the present invention includes a plurality of operation input means having a first operation input means, and a second operation input means composed of a pressure sensitive-type operation input device. The first operation input means and the second operation input means are arranged close to each other. The input device further includes an input competition managing means for invalidating an operation signal from the second operation input means for a period of time from the initiation of operation to the termination of the first operation input means, when operation signals are received from both of the first operation input means and the second operation input means.

By the above structure, even when a plurality of operation input means is arranged close to each other in order to respond various operations, competition between operation signals from a plurality of operation input means can be prevented. Therefore, unintended operations can be prevented without degrading operability while maintaining the performance which can be comfortably operated by an operator. Accordingly, an input device having a plurality of operation input means with excellent operability can be achieved.

Further, as an aspect of the invention, there is provided the input device in which the input competition managing means invalidates the operation signal from the second operation input means until a predetermined period of time has lapsed after operation of the first operation input means stops.

By the above structure, an operation signal from the second operation input means is invalidated for a predetermined period of time after the operation of the first operation input means stops, so that the competition between operation signals from a plurality of operation input means can be more reliably prevented, thereby preventing occurrence of malfunctions.

Further, an input device of the present invention includes a plurality of operation input means having the first operation input means, the second operation input means constructed by the pressure sensitive-type operation input device. The first operation input means and the second operation input means are arranged close to each other. The input device further includes an operation output control means for invalidating operation information output from the second operation input means until a predetermined period of time has lapsed after depressing of the second operation input means is detected.

By the above structure, the reaction at the time of the initial operation of the second operation input means can be blunted, and when an operator unintentionally touches the second input device composed of the pressure sensitive-type operation input device, for example, malfunctions can be prevented.

Further, the input device of the present invention includes a plurality of operation input means having the first operation input means, the second operation input means constructed by the pressure sensitive-type operation input device. The first operation input means and the second operation input means are arranged close to each other. The input device further includes an operation output control means, after a displacement from a previously depressed point is acquired with reference to a previously received operation signal when operation information is received from the second operation input means, for invalidating the received operation signal when the displacement exceeds a predetermined amount.

By the above structure, it is possible to prevent malfunctions when plural spots are depressed by the second operation input means. For example, when plural positions are touched with one finger, an unintended operation can be prevented.

Further, the present invention provides an electronic apparatus which includes at least one of the above-described input devices. By this structure, when the input device having a plurality of operation input means arranged close to each other is mounted, occurrence of an operator's unintended malfunction can be prevented, and various input operations can be performed while maintaining good operability.

According to the present invention, it is possible to provide an input device capable of preventing an operator's unintended operation without degrading operability, even when a plurality of operation input means is arranged close to each other so as to respond to various operations.

### <BRIEF DESCRIPTION OF THE DRAWINGS>

FIG. 1 is a plan view showing a schematic structure of a mobile phone for explaining an embodiment of the present invention;
FIG. 2 is a block diagram showing a functional structure around an input device of the mobile phone related to the embodiment;
FIG. 3 is a timing chart showing operation signals from respective input devices in the case of respectively operating a first input device and a second input device;
FIG. 4 is a view showing an operating sequence concerning an input operation control according to a first embodiment;
FIG. 5 is a flow chart showing a procedure of the input operation control according to the first embodiment;
FIG. 6 is a view showing an operating sequence concerning an input operation control according to a second embodiment;
FIG. 7 is a flow chart showing a procedure of the input operation control according to the second embodiment;
FIG. 8 is a view showing an operating sequence in the case of combining the input operation control of the first embodiment (FIG. 4) and the second embodiment (FIG. 6) ;
FIG. 9 is a view showing an operating sequence according to a comparative example;
FIG. 10 is a plan view showing the case that two separated points are depressed in a second input device of complex type; and
FIG. 11 is a flow chart showing a procedure of an input operation control according to a third embodiment.

In addition, reference numeral 2 denotes a display unit, reference numeral 3 denotes a first operation key, reference numeral 4 denotes a second operation key, reference numeral 5 denotes a third operation key, reference numeral 21 denotes a first input device, reference numeral 22 denotes a second input device, reference numeral 23 denotes a first input control unit, reference numeral 24 denotes a second input control unit, reference numeral 25 denotes an input managing unit, reference numeral 26 denotes a display control unit, and reference numeral 27 denotes a system control unit.

### <BEST MODE FOR CARRYING OUT THE INVENTION>

Hereinafter, a structure of an input device will be described in the following preferred embodiments, taking a mobile phone which is a kind of electronic apparatuses as an example.

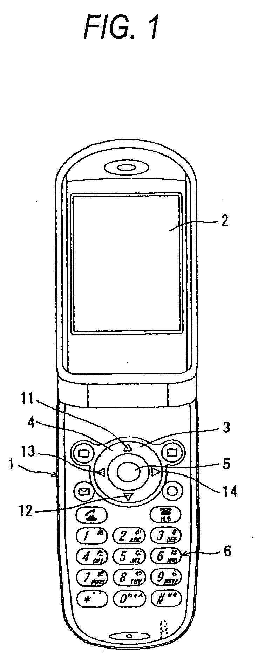

Fig. 1 is a plan view showing a schematic structure of the mobile phone for explaining the embodiment of the present invention. The mobile phone of the embodiment is constructed by arranging a display unit 2 equivalent to an example of a display means for displaying information, a first operation key 3, a second operation key 4, a third operation key 5 which construct a complex type input device in which a plurality of operation input means adjacent to each other, and a numeric keypad 6 for inputting telephone numbers or characters.

The display unit 2 is composed of a liquid crystal display (LCD), and displays stored information or received information that is a menu indicative of service contents or a submenu composed of a plurality of menu items related to the respective menu items, based on instructions of the control unit.

In the complex input device, the first operation key 3 is equivalent to the first input device functioning as a first operation input means, and is composed of a direction operation key that is an annular pushbutton type operation input means. The direction operation key enables operations in four directions of right, left, up and down. In the direction operation key, switches which are respectively turned on by depressing operations are disposed below direction key parts 11, 12, 13 and 14 corresponding to the respective directions of right, left, up and down. As an operator turns one of the switches on by depressing each of the direction key parts 11 to 14, an operation signal related to a direction instruction or the like corresponding to each direction is output.

The second operation key 4 is equivalent to the second input device functioning as a second operation input means, and is composed of an annular pressure sensitive-type operation input device provided at an inner peripheral side of the first operation key 3. The second apexation key 4 has a means for detecting pressure therein, and with an operation of depressing and tracing by an operator the second operation key 4 outputs an operation signal after detecting an operation location and an operation direction where depressing is performed.

The third operation key 5 is equivalent to the first input device functioning as the first operation input means similarly to the first operation key 3, is constructed by a circular pushbutton type operation input device provided at an inner peripheral side of the second operation key 4. In the third operation key 5, any one of the switches is turned on by a depressing operation, an operation signal related to the confirmation of a selected menu item, etc. is output. The first operation key 3, the second operation key 4 and the third operation key 5 are provided adjacent to each other in a small area so that they can be easily operated with one finger, for example, a thumb. The third operation key 5, the second operation key 4 and the first operation key 3 are concentrically and annularly disposed in the mentioned order from the inside toward the outside.

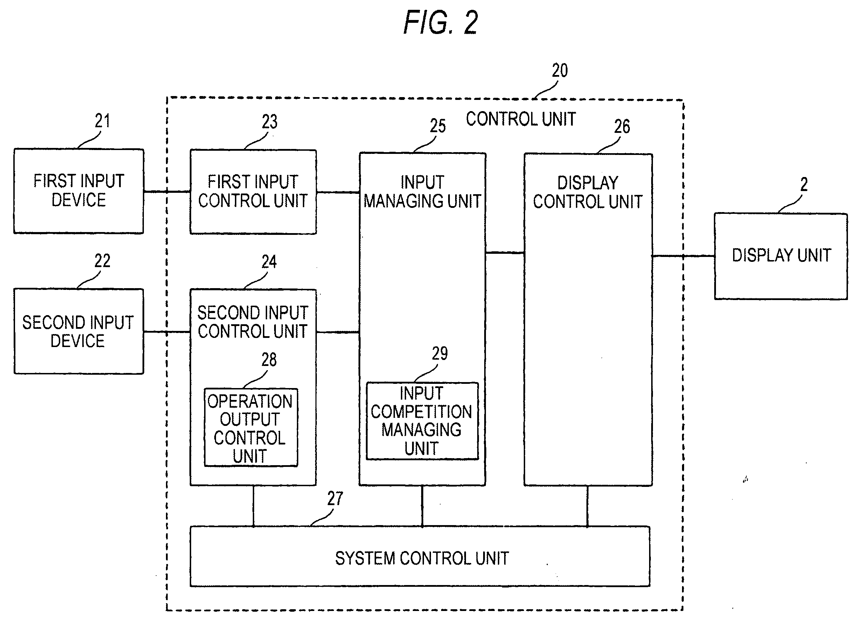

Fig. 2 is a block diagram showing a functional structure around the input device of the mobile phone related to the embodiment. The first input device 21 corresponding to the first operation key 3 and the third operation key 5, and the second input device 22 corresponding to the second operation key 4 are connected to a control unit 20 so that operation signals are input based on the operations of the first input device 21 and the second input device 22. The control unit 20 includes the first input control unit 23 for controlling the first input device 21, the second input control unit 24 for controlling the second input device 22, the input managing unit 25 for managing input of operation signals from the first input control unit 23 and the second input control unit 24 to notify such input to upper-level control units, the display control unit 26 for controlling display contents or the like on the display unit 2, and the system control unit 27 for controlling the entire device.

The second input control unit 24 has an operation output control unit (operation output control means) 28 for preventing malfunctions by controlling output of an operation signal from the second input device 22 to the input managing unit 25. The input managing unit 25 has an input competition managing unit (an input competition managing means) 29 for preventing malfunctions by managing the competition between input of an operation signal from the first input control unit 23 and input of an operation signal from the second input control unit 24. The display control unit 26 changes display contents to be displayed on the display unit 2, based on the operation signal from the first input control unit 23 or the second input control unit 24. For example, the display control unit performs a display control which shifts a cursor which selects display items such as menu, or which scrolls the display contents.

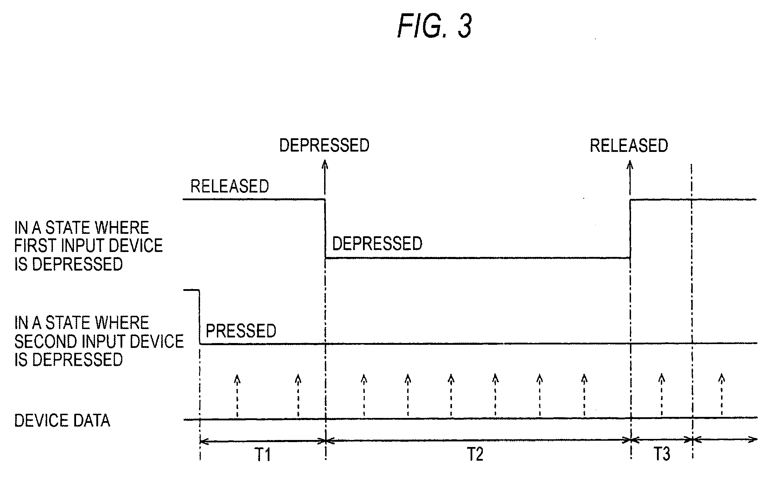

Fig. 3 is a timing chart showing operation signals from respective input devices in the case of respectively operating the first input device 21 and the second input device 22. Fig. 3 shows the relationship between a depressed state and an operation signal of the first input device 21, and the relationship between a depressed state an operation signal of the second input device 22, in a case in which the first input device 21 and the second input device 22 are concurrently operated.

If the first input device 21 is depressed, operation signals which indicate events of depressing (initiate operation) and releasing (terminate operation) are output. If the second input device 22 is depressed, operation signals which indicate events of depressing and releasing are output. At this moment, while the second input device is depressed, device data as operation information which indicates depressed locations is output at predetermined time intervals. Based on the device data, an operation location, an operation direction, and operation speed, etc. can be detected and output.

In the present embodiment, in a case in which the operator simultaneously operates the first input device 21 and the second input device 22, as shown in Fig. 3, for example, when an operator intends to depress the first input device 21 that is the pushbutton type operation input device, the operator unintentionally touches the second input device 22 that is the pressure sensitive-type operation input device, malfunctions is prevented by discarding an operation signal from the second input device 22. That is, in a period T2 that the first input device 21 is depressed, the input competition managing unit 29 of the input managing unit 25 invalidate the device data which has been output from the second input device 2 so that an operation signal from the second input device 22 is not output. In addition, to obtain a margin at the time of competition, in a period T3 until a predetermined period of time has lapsed just after the first input device 21 is released, the device data from the second input device 22 is invalidated in the same manner, so that an operation signals from the second input device 2 is not output. Thereby, the competition of operating inputs in a case in which in a case in which a plurality of input devices are concurrently operated, for example, an operator depresses the first input device 21 in contact with the second input device 22 and is eliminated, so that malfunctions such as unintended operations can be prevented.

Further, because it is easy for an operator to unintentionally touches the second input device that is the pressure sensitive-type operation input device, the period T1 until a predetermined period of time has lapsed just after the second input device 22 is depressed is set as a period for determination of depressing, and whether the second input device 22 is depressed ad desired or not is determined. During the depressing determination period, the operation output control unit 28 of the second input control unit 24 invalidates device data from the second input device 22, so that operation signal is not output from the second input device 2. Thereby, malfunctions at the time of initial operation of the second input device 22 itself can be prevented, for example, when an operator slightly touches the second input device 22 without intension in order to depress the first input device 21 immediate before the depressing operation.

Hereinafter, an operation control at the time of input operations by a plurality of input devices according to the present embodiment will be described in detail.

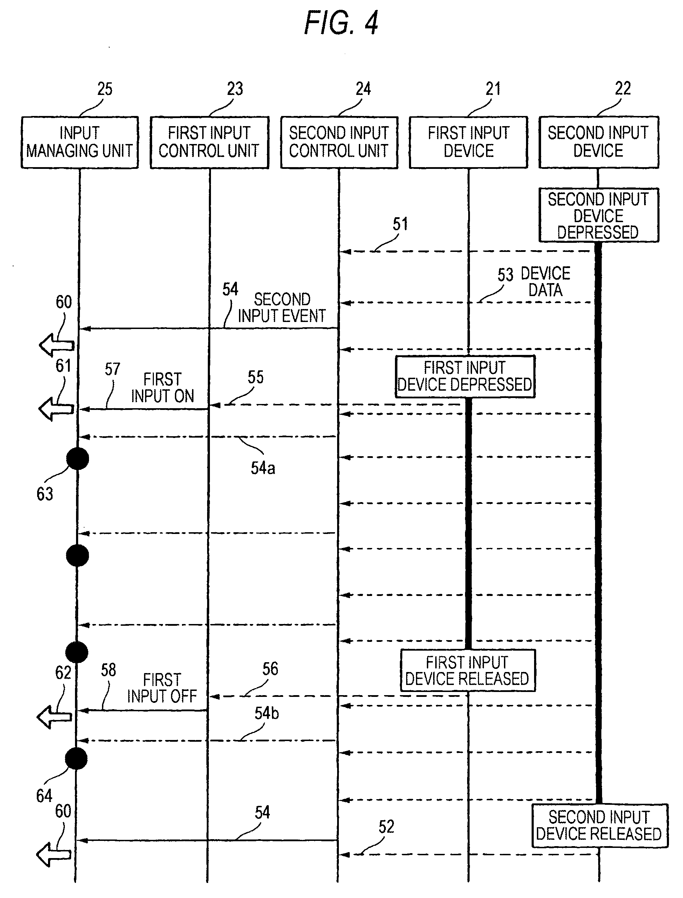

Fig. 4 is a view showing an operating sequence concerning an input operation control according to a first embodiment. The first embodiment is directed to a control for preventing malfunctions, that is, invalidating an operation signal from the second input device 22 in a case in which the first input device 21 and the second input device 22 are concurrently operated. In a case in which an operator intends to depress the first input device 21, as shown in Fig. 1, a plurality of input devices exists within an area in which can be operated with only one finger such as a thumb. Thus, an operator may touch the second input device 22 that is the pressure sensitive-type operation input device as well, which causes malfunctions which leads to operation results different from the operator's intention. The first embodiment is constructed to prevent these malfunctions.

If the second input device 22 is depressed, a depressing signal 51 and a releasing signal 52 which indicate events at the time of depressing initiation and releasing are input to the second input control unit 24 from the second input device 22, and the depressing and releasing of the second input device 22 are notified to the second input control unit 24. Further, until the second input device 22 is depressed and released, device data 53 which indicates depressed locations periodically at predetermined time intervals by interlocking with locations touched by an operator is output, and input to the second input control unit 24. The second input control unit 24 outputs and notifies a second input event signal 54 as an operation signal which indicates input from the second input device 22 to the input managing unit 25, based on the received device data 53, when an operation is performed by a predetermined displacement. The input managing unit 25 receives the operation signal from the second input control unit 24, and notify an operation signal 60 to an upper control unit such as the display control unit 26 or the system control unit 27.

If the first input device 21 is depressed, a depressing signal 55 and a releasing signal 56 which indicate events at the time of depressing initiation and releasing are input to the first input control unit 23 from the first input device 21, and the depressing and releasing of the first input device 21 are notified to the first input control unit 23. Then, a first input ON signal 57 and a first input OFF signal 58 as operation signals which indicate depressing and releasing of the first input device 21 are output from the first input control unit 23 to the input control unit 25. The input managing unit 25 receives the operation signal from the first input control unit 23, and then notify operation signals 61 and 62 to an upper control units such as the display control unit 26 or the system control unit 27.

Here, when the input managing unit 25 receives the second input event signal 54a from the second input control unit 24, the input managing unit 25 determines whether the first input device 21 is being depressed or not by the operation signal from the first input control unit 23. If the first input device is being depressed, the input managing unit 25 discards the second input event signal 54a indicated by a one-dot chain line, so that the second input event signal is not notified to the upper control unit as indicated by a black circle 63 in the drawing. As a result, the input from the second input device 22 is invalidated for the period of time from depressing to releasing of the first input device 21. In the same manner, a second input event signal 54b is invalidated for a predetermined period after releasing the first input device 21, so that so that notification to an upper control unit is not performed, as indicated by a black circle 64 in the drawing, thereby invalidating the input from the second input device 22.

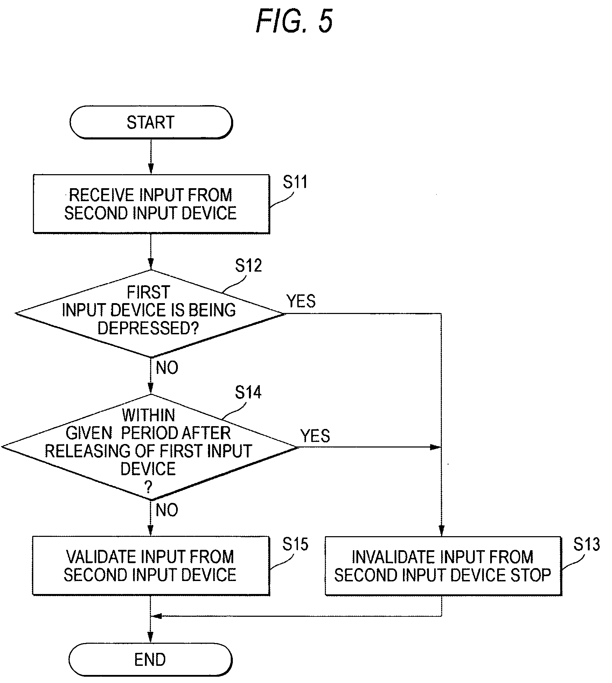

Fig. 5 is a flow chart showing a procedure of the input operation control according to the first embodiment. Hereinafter, the processing in the input managing unit 25 of the input competition managing unit 29 will be mainly described. When the input managing unit 25 receives an input signal from the second input device 22 (Step S11) by the second input event signal 54 from the second input control unit 24, the input managing unit 25 determines whether the first input device 21 is being depressed or not (Step S12) according to the receiving state of operation signal from the first input control unit 23. Here, in a case in which the first input device 21 is being depressed, the input from the second input device 22 are invalidated, so that so that notification to an upper control unit is not performed (Step S13).

In a case in which the first input device 21 is not being depressed in Step S12, whether a predetermined period of time has lapsed after the first input device 21 is released or not is determined (Step S14). At this point, if the input managing unit 25 receives the first input OFF signal 58 from the first input control unit 23, a timer and etc. measures the time from the point of time when the first input OFF signal 58 is received, and then whether a predetermined period of time has passed or not is determined. In Step S14, if a predetermined period of time has not lapsed after the first input device 21 is released, similarly to the above, the input from the second input device 22 is invalidated in Step S13, so that notification to an upper control unit is not performed. On the other hand, in Step S14, in a case in which a predetermined period of time has passed after the first input device 21 is released, the input from the second input device 22 is validated, and then operation signal is output and notified to an upper control unit (Step S15).

In a case in which the second input device 22 is operated, for the period from the depressing of the first input device 21 to the releasing of the first input device 21, and for a predetermined period after the first input device 21 is released, malfunctions due to the competition between the two input devices can be prevented by executing the processing in the input managing unit 25 as described above.

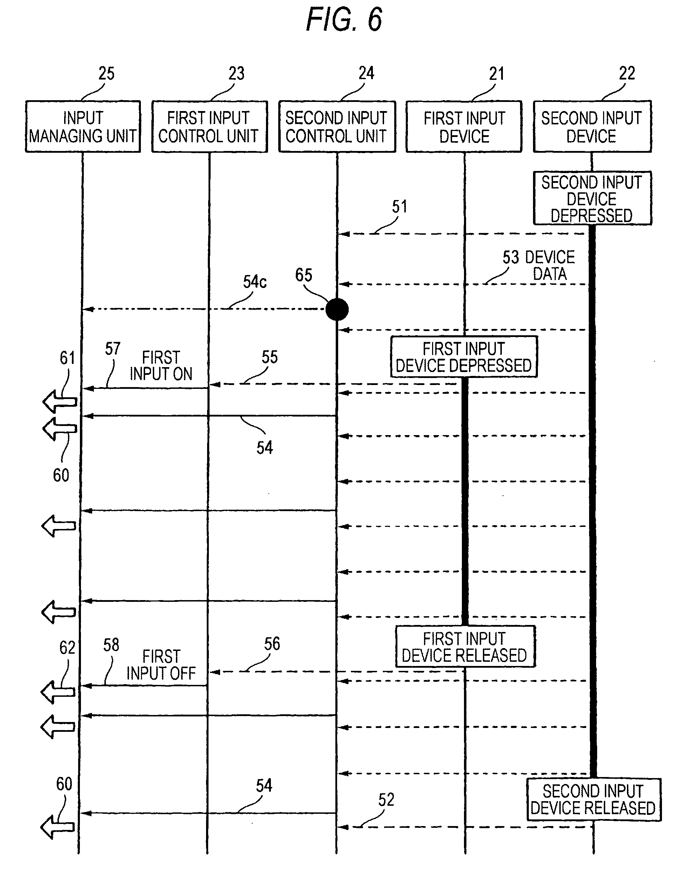

Fig. 6 is a view showing an operating sequence concerning an input operation control according to a second embodiment. The second embodiment is directed to a control for preventing malfunctions, that is, invalidating operation signal from the second input device 22 within a predetermined period after the depressing of the second input device 22 is detected. In a case in which an operator unintentionally touches the second input device 22 that is the pressure sensitive-type operation input device, if the second input device 22 reacts immediately, malfunctions that an operation signal is input against the operator's intention occur. In the second embodiment, occurrence of such malfunctions is prevented.

In the second embodiment, in a case in which the second input device 22 is depressed and receives the device data 53, for a predetermined period from the initiation of the second input device 22, the second input control unit 24 stops input of the second input event signal 54 to the input managing unit 25, as indicated by a black circle 65 in the drawing, so that the second input event signal 54c indicated by a two-dot chain line is not output. In this way, the period until a predetermined period of time has lapsed after the second input device 22 is depressed is set to be a depressing determining period for determining whether the operation coincides with an operator's intention or not, and for the period, the input from the second input device 22 are invalidated so that notification to the input managing unit 25 is not performed.

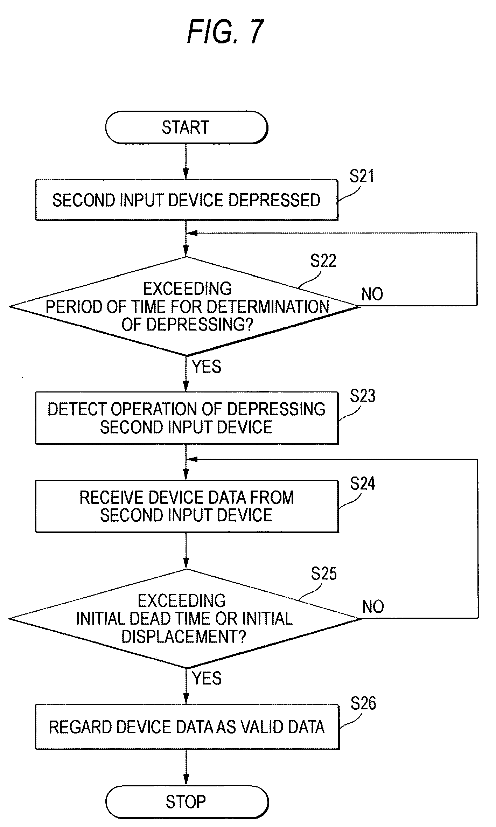

Fig. 7 is a flow chart showing a procedure of the input operation control according to the second embodiment. Hereinafter, the processing in the operation output control unit 28 of the second input control unit 24 will now be mainly described. If the second input control unit 24 receives the depressing signal 51 from the second input device 22 and detects that the second input device 22 is depressed (Step S21), the second input control unit 24 determines whether the depressing determination period is exceeded or not, and then waits until the depressing determination period has lapsed after detecting depressing (Step S22). Here, if the second input control unit 24 receives the depressing signal 51 from the second input device 22, the second input control unit 24 controls a timer, etc. to measure the time from the point of time when the depressing signal 51 is received, etc., and then determines whether a predetermined period set as the depressing determination period has lapsed or not.

In a restricted case that the second input device 22 is continuously depressed for a predetermined period after the depressing determination period has lapsed in Step S22, the continuous depressing is considered as operator's intended operation, then depressing of the second input device 22 is detected (Step S23), and then the device data 53 is received from the second input device 22 (Step S24). Then, it is determined from the received device data 53 whether a preset initial dead time or initial displacement is exceeded or not after the device data 53 is received (Step S25). At this moment, in a case in which the initial dead time or the initial displacement is not exceeded, the process returns to Step S24, and then the next device data 53 is received until the initial dead time or the initial displacement is exceeded. In a restricted case that it is determined that the initial dead time or the initial displacement is exceeded, the device data 53 is treated as valid data (Step S26).

Thereafter, when the second input device 22 is being depressed, that is, until the releasing signal 52 is received from the second input device 22, the next device data 53 is received. Then, in a case in which when an operation is performed by a given amount of displacement after the received present device data is compared with the previous device data, the second input event signal 54 is output to the input managing unit 25, and then operating input from the second input device 22 is notified.

As described above, by executing the processing in the second input control unit 24, the reaction of the initial operation of the second input device 22 that is the pressure sensitive-type operation input device can be blunted, so that malfunctions caused by unintended operations of the second input device 22 can be prevented until a predetermined period of time has lapsed after the second input device 22 is depressed. Accordingly, even when an operator touches the second input device 22 immediately before depressing the first input device 21, as shown in Fig. 6, to depress the second input device 22, malfunctions caused by the second input device 2 can be prevented.

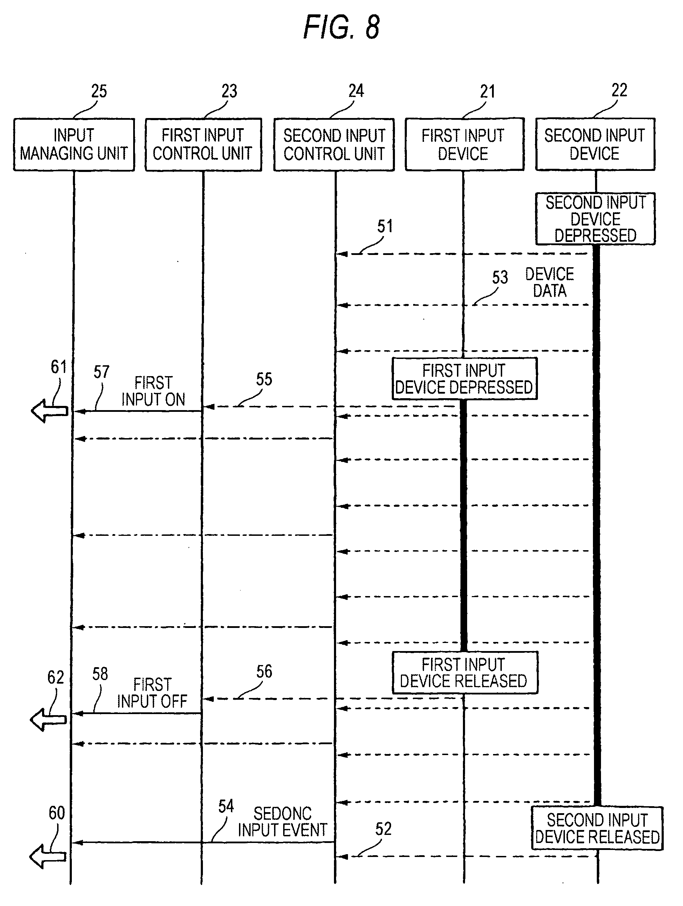

Fig. 8 is a view showing an operating sequence in the case of combining the input operation controls of the first embodiment (Fig. 4) and the second embodiment (Fig. 6). In this case, for the period from depressing of the first input device 22 to releasing of the first input device 22, for a predetermined period of time after the first input device 22 is released, and for the period until a predetermined period of time has passed after the second input device 22 is depressed, if there are competition between inputs of the first input device 21 and of the second input device 22 or unintended depressing of the second input device 22, an operation signal is not notified to an upper control unit. Thereby, a cause of malfunction is eliminated because notification to an upper control unit from the input managing unit 25 is prevented from being mixed with notification of operation signals from a plurality of input devices.

In this way, by executing the combined input operation control for preventing malfunctions, even when a plurality of input devices is disposed close to each other within a small area, the operator's operational feeling interlocked with an operator's operation can be obtained by suppressing malfunctions caused by the competition of operation signals from a plurality of input devices, or differences in reaction sensitivity between the pushbutton type operation input device and the pressure sensitive-type operation input device.

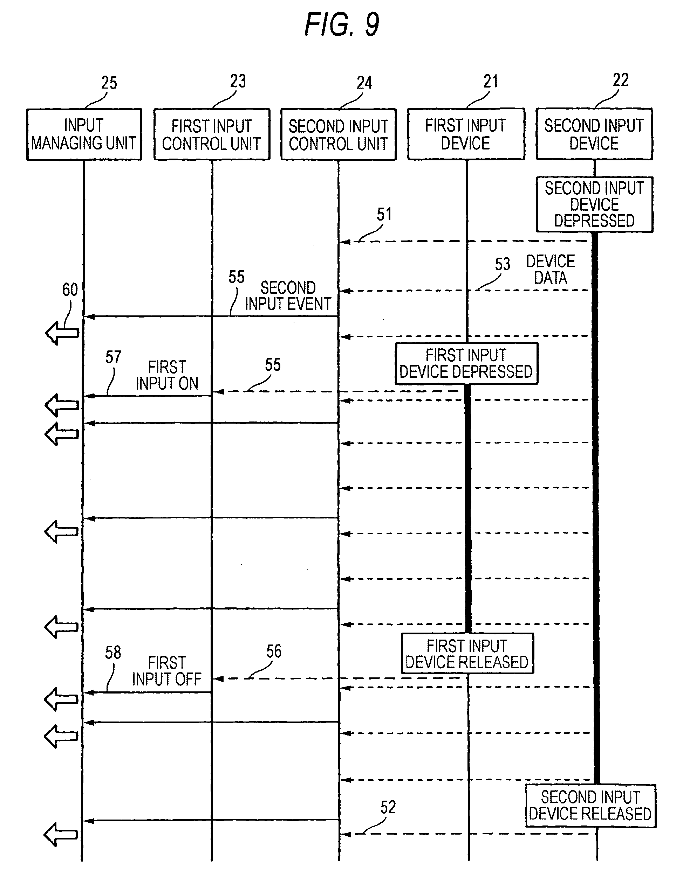

Fig. 9 is a view showing an operating sequence according to a comparative example. In the comparative example, the control of the present embodiment for preventing malfunctions as described above is not executed.

In a case in which an operator intends to depress the first input device 21 while he/she unintentionally touches the second input device 22, first, at a point of time when the operator touches the second input device 22, the depressing signal 51 is notified to the second input control unit 24 from the second input device 22. Thereafter, until the second input device 22 is released, the device data 53 is periodically notified to the second input control unit 24, by interlocking with locations touched by the operator. Then, whenever an operation is performed by a given amount of displacement, the second input event signal 54 is notified to the input managing unit 25 from the second input control unit 24. In addition, in a case in which the first input device 21 is depressed and released, the first input ON signal 57 and the first input OFF signal 58 are respectively notified to the input managing unit 25 via the first input control unit 23.

In the case of the comparative example, there is no output control in the second input control unit 24. Also, from the input managing unit 25, notification of operation signals from the first input control unit 23 and the second input control unit 24 are notified to an upper control unit as it is. Accordingly, since notification from the input managing unit 25 to an upper control unit may be mixed with notification of operation signals from a plurality of input devices, malfunctions may occur, which is an obstacle to the operational feeling which is interlocked with the operator's operation.

In contrast, according to the present embodiment, occurrence of malfunctions can be prevented by preventing operation signals from a plurality of input devices from being mixed with others, and by eliminating output of unintended operation signal from the second input device that is the pressure sensitive-type operation input device.

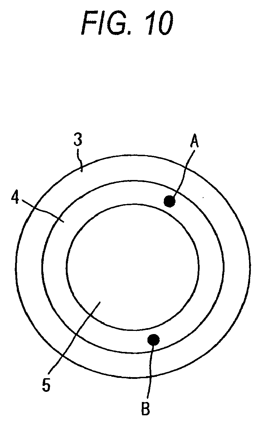

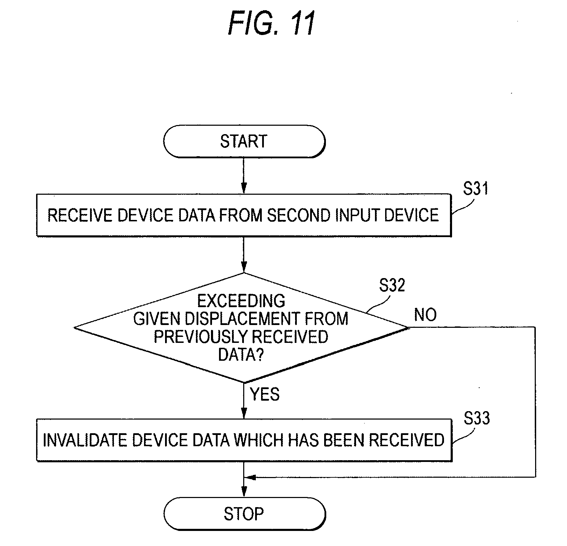

Fig. 10 and Fig. 11 illustrate the input operation control of a third embodiment. Fig. 10 is a plan view showing the case that two separated points are depressed in a second input device of complex type, and Fig. 11 is a flow chart showing a procedure of the input operation control according to the third embodiment.

The second operation key 4 used as the second input device 22 is constructed by an annular pressure sensitive-type operation input device, and has a function to input operations of shifting a cursor, a pointer, contents, etc. on a display screen, by interlocking with the direction in which an operator operates by depressing and tracing or by interlocking with the displacement. As shown in Fig. 1, the input device of the present embodiment is constructed as an input device of complex type in which the first operation key 3, the second operation key 4, and the third operation key 5 are arranged concentrically and annularly.

In case those different kinds of input devices are provided close to each other as above, when an operator intends to operate an input device such as the first operation key 3 or the third operation key 5 other than the second operation key 4, or when an operator unintentionally touches the second operation key 4, as shown in Fig. 10, two separated points A and B on the second operation key 4 may be depressed. In this case, a detected depressed point and the next depressed point are dispersed, which causes malfunctions.

Therefore, in the third embodiment, as a control for preventing malfunctions, in the second input device 22 that is the pressure sensitive-type operation input device, if the displacement of a depressed point exceeds a given amount, the device data is invalidated. Thereby, occurrence of malfunction caused by the fact that two separated points are depressed can be prevented.

In a flow chart of Fig. 11, the processing in the operation output control unit 28 of the second input control unit 24 will be mainly described. If the second input control unit 24 receives device data from the second input device 22 (Step S31), the received present device data is compared with the previously received device data, and then determines whether the displacement from the previously received device data exceeds a given amount, in other words, determines whether the received present depressed point is separated by a given amount more than the previously received depressed point or not (Step S32). At this moment, in a case in which the displacement is below a given amount, the process proceeds to the next step. Then, device data is received at predetermined intervals until an operation is performed by a predetermined amount of displacement. If an operation is performed by a predetermined amount of displacement, the second input event signal is output to the input managing unit 25, and then the operating input from the second input device 22 are notified.

On the other hand, in a case in which the displacement from the previously received device data exceeds a given amount, the received device data is invalidated and discarded (Step S33). Thereby, in a case in which an operator unintentionally depresses two separated points on the pressure sensitive-type operation input device, occurrence of malfunctions can be prevented by eliminating an operation which is not interlocked with operator's operation.

As described above, according to the present embodiment, even when a plurality of operation input means including the first input device 21 and the second input device 22 is arranged close to each other so as to respond to various operations, the competition between operation signals from a plurality of operation input means can be prevented. Therefore, an unintended operation can be prevented without degrading operability while maintaining the performance which can be comfortably operated by an operator. Accordingly, an input device with excellent operability and capable of responding to various operations can be provided. In addition, by mounting such an input device to an electronic apparatus such as a mobile phone, various input operations corresponding to the contents that require a sense of speed or other various contents are allowed. Malfunctions can be prevented while maintaining good operability.

In addition, according to the present embodiments, individual values as references for determination can be properly set according to the structure and specification of the input device, an operator' tastes, and specification of the contents for operation. The respective values include, for example, a given period from the releasing of the first input device 21 when an operation signal from the second input device 22 is invalidated, a given period from the initiation of depressing of the second input device 22 when device data from the second input device 22 is invalidated (the depressing determination period), a given displacement which is determined as depressing between two separated points in the second input device 22, a given displacement which is determined that an operation is performed by a given amount of displacement in the second input device 22 so that an input event signal is output, etc. These values can be dynamically changed, for example, by setting operations by an operator or input of content information by an operator.

Further, the control for preventing malfunctions in the input managing unit 25 and the second input control unit 24 may be executed in other units, and each processing in the control for preventing malfunctions can be variously modified and applied without departing from the technical scope of the present invention.

The input device of the present invention is not limited to the mobile phone described in the above embodiments, and can be mounted and applied to various electronic apparatuses.

Although the present invention has been described in detail with reference to the specific embodiments, it is obvious that various modifications or alternations can be made without departing from the spirit and technical scope of the present invention.

The present application is based on Japanese Patent Application No. 2003-351526 which is filed on October 10, 2003, and the contents are incorporated herein by reference.

### <Industrial applicability>

Even when a plurality of operation input means is arranged close to each other so as to respond to various operations, the present invention has effects that unintended operations can be prevented without degrading operability, and is useful for input devices for portable electronic apparatuses or the like.

## Claims

1. An input device comprising:
a plurality of operation input means including a first operation input means, and a second operation input means composed of a pressure sensitive-type operation input device, the first operation input means and the second operation input means being arranged close to each other, and
an input competition managing means for invalidating an operation signal from the second operation input means for a period of time from the initiation of operation to the termination of the first operation input means, when operation signals are received from both of the first operation input means and the second operation input means.

2. An input device according to claim 1,
wherein the input competition managing means invalidates the operation signal from the second operation input means until a predetermined period of time has lapsed after operation of the first operation input means stops.

3. An input device comprising:
a plurality of operation input means including a first operation input means, and a second operation input means composed of a pressure sensitive-type operation input device, the first operation input means and the second operation input means being arranged close to each other, and
an operation output control means for invalidating operation information output from the second operation input means until a predetermined period of time has lapsed after depressing of the second operation input means is detected.

4. An input device comprising:
a plurality of operation input means including a first operation input means, and a second operation input means composed of a pressure sensitive-type operation input device, the first operation input means and the second operation input means being arranged close to each other, and
an operation output control means, after a displacement from a previously depressed point is acquired with reference to a previously received operation signal when operation information is received from the second operation input means, for invalidating the received operation signal when the displacement exceeds a predetermined amount.

5. An electronic apparatus comprising:
an input device including a plurality of operation input means including a first operation input means, and a second operation input means composed of a pressure sensitive-type operation input device, the first operation input means and the second operation input means being arranged close to each other, and
an input competition managing means for invalidating an operation signal from the second operation input means for a period of time from the initiation of operation to the termination of the first operation input means, when operation signals are received from both of the first operation input means and the second operation input means.

6. An electronic apparatus according to claim 5,
wherein the input competition managing means invalidates the operation signal from the second operation input means until a predetermined period of time has lapsed after operation of the first operation input means stops.

7. An electronic apparatus comprising:
an input device including a plurality of operation input means including a first operation input means, and a second operation input means composed of a pressure sensitive-type operation input device, the first operation input means and the second operation input means being arranged close to each other, and
an operation output control means for invalidating operation information output from the second operation input means until a predetermined period of time has lapsed after depressing of the second operation input means is detected.

8. An electronic apparatus comprising:
an input device including a plurality of operation input means including a first operation input means, and a second operation input means composed of a pressure sensitive-type operation input device, the first operation input means and the second operation input means being arranged close to each other, and
an operation output control means, after a displacement from a previously depressed point is acquired with reference to a previously received operation signal when operation information is received from the second operation input means, for invalidating the received operation signal when the displacement exceeds a predetermined amount.
